# EUROPÄISCHE PATENTSCHRIFT

(11) **EP 3 724 613 B1**
(45) Veröffentlichungstag und Bekanntmachung des Hinweises auf die Patenterteilung: **18.09.2024**
(21) Anmeldenummer: 18789650.1
(22) Anmeldetag: 19.10.2018
(51) Int. Cl.: G01F 23/74, G01F 23/00

(54) **FLUIDBEHÄLTER MIT EINER EINRICHTUNG ZUR FÜLLSTANDSÜBERWACHUNG**
FLUID CONTAINER HAVING A DEVICE FOR FILL LEVEL MONITORING
RÉCIPIENT À FLUIDE COMPRENANT UN DISPOSITIF DE SURVEILLANCE DE NIVEAU DE REMPLISSAGE

(30) Priorität: 13.12.2017 DE 102017222672
(43) Veröffentlichungstag der Anmeldung: 21.10.2020
(73) Patentinhaber: Continental Automotive Technologies GmbH, 30175 Hannover (DE)
(72) Erfinder: SCHLICHT, Stephan, 64569 Nauheim (DE); KRÄMER, Horst, 65462 Ginsheim-Gustavsburg (DE); RÜFFER, Manfred, 65843 Sulzbach (DE); KREBS, Werner, 65582 Hambach (DE); OTTMANN, Swen, 60488 Frankfurt am Main (DE)
(74) Vertreter: Continental Corporation
(86) Internationale Anmeldenummer: PCT/EP2018/078727
(87) Internationale Veröffentlichungsnummer: WO 2019/115067

(56) Entgegenhaltungen:
- DE-A1- 102014 006 276
- DE-A1- 102015 210 845
- DE-A1- 19 833 464
- DE-U1- 8 533 754
- JP-B2- 5 995 654
- US-A1- 2017 074 714

## Beschreibung

Fluid sind in vielfältigen Ausführungen bekannt und weit verbreitet. DE 10 2010 042 646 A1 offenbart Beispiele für Flüssigkeitsbehälter mit Füllstandsmessung.

Aus DE 10 2010 042 646 A1 ist beispielsweise ein als Bremsflüssigkeitsbehälter einer Kraftfahrzeugbremsanlage ausgeführter Fluidbehälter bekannt. Der Fluidbehälter verfügt über eine Einrichtung zur Erkennung vom Mindestfüllstand der eingefüllten Bremsflüssigkeit. Hierfür weist die Einrichtung eine Signaleinheit mit einem kostengünstigen und betriebssicheren Reed-Schalter, welcher von einem Ringmagneten aktiviert wird und dabei einen Stromkreis schließt. Der Reed-Schalter ist in einem senkrechten zylindrischen Führungsrohr in der Höhe des zulässigen Mindestfüllstandes in dem Behälter angeordnet. Der Ringmagnet ist in einem ringförmigen Schwimmer untergebracht und bildet zusammen mit diesem einen Positionsgeber, welcher um das Führungsrohr herum angeordnet ist und an diesem geführt wird. Ein Reed-Schalter reagiert lediglich digital auf die Magnetfeldstärke oberhalb einer bestimmten Schwelle und bietet damit einen einzigen starren Auswertungspunkt. Das Magnetfeld eines üblicherweise verwendbaren Magneten bildet jedoch neben einer Hauptkeule auch räumlich versetzte Nebenkeulen, welche den Reed-Schalter ebenfalls aktivieren könnten. Um Fehlschaltungen zu vermeiden wird daher der Freigang des Positionsgebers im Sinne seiner möglichen Bewegungsstrecke durch geeignete Anschläge stark eingeschränkt, wobei der untere Anschlag auch den zu überwachenden Füllstand festlegt. Der Messpunkt ist somit konstruktiv definiert und kann nicht nachträglich verändert, kalibriert oder angepasst werden.

Zum Ausgleich von Belagverschleiß wird konstruktionsbedingt Bremsflüssigkeit aus dem Bremsflüssigkeitsbehälter in die die radbremsen verlagert, der Füllstand im Bremsflüssigkeitsbehälter sinkt dadurch. Ebenso Verursachen Umwelteinflüsse wie insbesondere Temperatut oder Luftfeuchtigkeit natürliche Schwankungen der Füllhöhe. Weil eine Bremssicherheit für eine definierte Zeit oder Strecke dennoch gewährleistet werden muss, wird in dem Fluidbehälter unterhalb der Schaltposition ein Sicherheitsvorrat an Bremsflüssigkeit mitgeführt, wodurch die Abmessungen des Fluidbehälters mit Nachteilen für den benötigten Bauraum vergrößert sind.

Des Weiteren wird die Überwachung der Funktionsfähigkeit als verbesserungswürdig angesehen. So kann beispielsweise das Blockieren oder Klemmen des Positionsgebers nicht zuverlässig erkannt werden. Ebenso kann mit der bekannten Einrichtung lediglich eine extreme Leckage wie beispielsweise bei Totalausfall eines Bremskreises, signalisiert werden. Schleichende Leckagen könnten dagegen lange Zeit unerkannt bleiben.

Aus DE 102014006276 A1 ist eine verbesserte Messvorrichtung zum Messen des Pegels einer Flüssigkeit in einem Behälter bekannt, welche eine Sensorzeile mit entlang eines Messwegs beabstandet voneinander angeordneten magnetfeldempfindlichen Sensoren aufweist, wobei ein oder mehrere der Sensoren als ein Hallsensor ausgebildet sein könnten, wodurch eine Interpolation von Schwimmerpositionen im Bereich zwischen zwei Sensorelementen ermöglicht wird. Jedoch bleibt auch bei einer derartig gestalteten Messvorrichtung die Herausforderung bestehen, den erforderlichen Sicherheitsvorrat von Bremsflüssigkeit und somit auch die Behältergröße möglichst zu reduzieren.

Es stellt sich somit eine Aufgabe, einen verbesserten Fluidbehälter mit zuverlässigen Füllstandsüberwachung vorzuschlagen, mit dem die vorgenannten Nachteile vermieden werden könnten.

Die Aufgabe wird erfindungsgemäß mit einem Fluidbehälter mit der Merkmalskombination nach Anspruch 1 gelöst. Unteransprüche schlagen erfindungsgemäß weitere vorteilhafte Ausführungen und Weiterbildungen vor. Ebenso werden Verfahren zur Funktionserweiterung beim Betrieb der erfindungsgemäßen Einrichtung vorgeschlagen.

Die Erfindung sieht vor, dass die Signaleinheit im Wesentlichen innerhalb eines Führungsrohrs angeordnet und der Positionsgeber an derselben Führungsrohr geführt sowie im Wesentlichen bis zu einem Boden des Fluidbehälters bewegbar sein.

Des Weiteren sieht die Erfindung vor, am Boden des Fluidbehälters einen in Richtung Führungsrohr vorgestreckten Vorsprung vorzusehen, welcher ebenso zur Führung des Positionsgebers geeignet ist und zusammen mit dem Führungsrohr eine ungehinderte Bewegbarkeit des Positionsgeber bis zum Boden des Fluidbehälters ermöglicht. Damit kann die Länge des Führungsrohrs mit Steifigkeitsvorteilen und bei reduzierten Schwingungsneigung ohne Funktionsnachteile und ohne Reduzierung der Bewegungsstrecke optimal kurz gehalten werden. Ebenso können besonders große Füllhöhen einfacher überbrückt werden

Wegen der Proportionalität der Ausgangsspannung zur Magnetfeldstärke bei einem Hall-Element lässt sich die Position des Positionsgebers statt an einem starren Schaltpunkt innerhalb einer ausgedehnten Erfassungsstrecke, zudem kontinuierlich ermitteln. Ebenso können Leckagen anhand von Positionsveränderung des Positionsgebers innerhalb der Erfassungsstrecke erkannt werden. Beispielsweise kann die Füllhöhe im Stand oder beim Starten des Fahrzeugs ermittelt und mit weiteren Informationen wie beispielsweise Belagverschleißanzeige verglichen werden, worauf bei unerwarteten Abweichungen frühzeitig reagiert werden kann.

Ebenso wird es möglich, die Einrichtung zur Füllstandsüberwachung per Software zu kalibrieren, um beispielsweise Fertigungstoleranzen auszugleichen, Varianten abzubilden oder temperaturbedingte Füllstandsschwankungen auszugleichen.

Hierdurch wird eine zuverlässige Messung des tatsächlichen Restvolumens im Fluidbehälter durchführbar. Ein Reservevorrat kann signifikant verringert werden oder gänzlich entfallen. Dadurch muss weniger Fluid mitgeführt werden, die Behälterabmessungen können verringert werden. Aufgrund des geringeren Fluidvorrats wird die mechanische Belastung des Gehäuses verringert, dadurch kann die Wandstärke werkstoff- und kostensparend ebenfalls verringert werden. Gewicht wird reduziert.

Gemäß einer vorteilhaften Weiterbildung kann zwischen dem Führungsrohr und dem Vorsprung eine formschlüssige Zentriereinrichtung vorgesehen werden, um effektiv selbsttätig bei Montage eine koaxiale Ausrichtung des Führungsrohrs mit dem Vorsprung für eine exakte Führung des Positionsgebers zu erwirken.

Des Weiteren sieht die Erfindung vor, das das Magnetfeld des Magnetelements wenigstens eine Hauptkeule und wenigstens eine Nebenkeule aufweist, welche in dem Hall-Element unterschiedliche Ausgangsspannungen hervorrufen und eine elektronische Auswerteeinheit vorgesehen ist, welche auf Basis der durch die Haupt- und/oder Nebenkeulen in dem Hall-Element hervorgerufenen Ausgansspannungen eine eindeutige Position des Positionsgebers innerhalb einer Erfassungsstrecke ermittelt, womit eine kontinuierliche Überwachung der Lage des Positionsgebers mit Ermittlung von beliebigen Hauptereignissen und Zwischenständen ermöglicht wird. Durch Abgleich der dadurch gewonnenen Ergebnissen mit anderen Ereignissen wie beispielsweise räumlichen Fahrzeuglage, oder Bremsbelagverschleiß kann eine äußerst zuverlässige Plausibilitätsprüfung der Messeinrichtung sowie Funktionsprüfung einzelner Komponenten wie Positionsgeber oder Signaleinheit autonom im Fahrzeugbetrieb realisiert werden.

Vorzugsweise soll die erfindungsgemäße Messeinrichtung, insbesondere die technischen Eigenschaften, Anzahl und gegebenenfalls Verteilung der Hall-Elemente derart ausgelegt sein, dass die Erfassungsstrecke größer als 10mm, insbesondere größer als 20mm vorgesehen ist und besonders bevorzugt sich über die gesamte realisierbare Füllhöhe des Fluidbehälter erstreckt. Damit kann das Innenvolumen des Fluidbehälters effektiv ausgenutzt werden, es können nicht nur Leckage, sondern auch Überfüllung rechtzeitig registriert und geeignete Gegenmaßnahmen eingeleitet werden.

Besonders effektiv und vorteilhaft kann der erfindungsgemäße Fluidbehälter als Bremsflüssigkeitsbehälter einer hydraulischen Kraftfahrzeugbremsanlage eingesetzt werden, um Vorteile der erhöhten Funktionalität und der verringerten Abmessungen effektiv auszunutzen. Andere Anwendungsszenarien wie beispielsweise ein Waschflüssigkeitsbehälter für Scheiben- oder Kamerareinigungsanlagen eines Kraftfahrzeugs sind jedoch ebenso möglich.

Des Weiteren sieht die Erfindung vorteilhafte Verfahren mit erhöhtem Funktionsumfang zum Betrieb des erfindungsgemäßen Fluidbehälters.

Gemäß eines ersten erfindungsgemäßen Verfahrens kann die Position des Positionsgebers in regelmäßigen Zeitabständen, insbesondere kontinuierlich ermittelt und mit den auf Basis von Erfahrungswerten oder Modellrechnungen erwarteten Füllstandswerten, verglichen. Bei Feststellung einer progressiven Abweichung in Richtung Füllstandsabnahme wird eine Leckage des Fluiden vermutet und eine zugeordnete Warn- und/oder Gegenmaßnahme eingeleitet. Mit diesem Verfahren kann neben einer frühzeitigen Erkennung einer schleichenden Leckage ferner eine Plausibilitätsprüfung der Messeinrichtung durchgeführt werden, wenn die gemessenen Füllstandswerte beispielsweise mit gemessenen Belagverschleißwerten abgeglichen werden.

Gemäß eines zweiten erfindungsgemäßen Verfahrens kann die Position des Positionsgebers bei Fahrbetrieb in regelmäßigen Zeitabständen, insbesondere kontinuierlich ermittelt und auf Korrelation mit räumlichen Beschleunigungswerten des Fahrzeugs geprüft wird, welche beispielsweise mithilfe eines Gierratensensors feststellbar sind. Wenn die gemessene Position mehrfach von einer erwarteten Position abweicht, wird eine Behinderung einer ordnungsgemäßen Freigängigkeit des Positionsgebers - beispielsweise ein Verkanten, Verklemmen, Anhaften von Fremdpartikeln und Dergleichen - angenommen und eine zugeordnete Warn- und/oder Gegenmaßnahme eingeleitet.

Im Folgenden werden die Einzelheiten und Vorteile der Erfindung anhand Figurenbeschreibungen näher erläutert. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen.

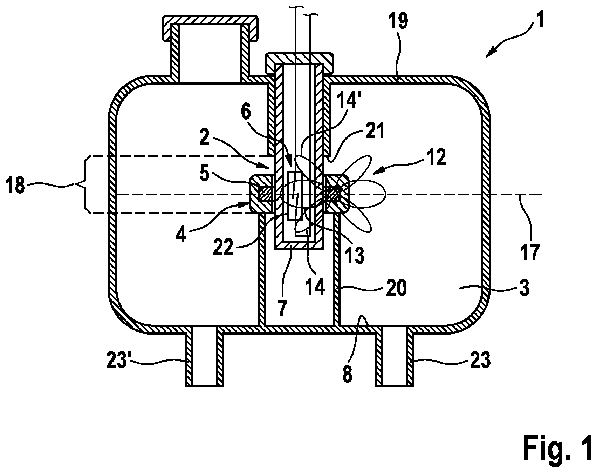

Im Einzelnen zeigen am Beispiel eines Bremsflüssigkeitsbehälters in Schnittdarstellung, schematisch und stark vereinfacht, die
Fig.1 einen bekannten gattungsgemäßen Fluidbehälter mit einem Reed-Schalter in der Signaleinheit.
Fig.2 eine Ausführungsform des Fluidbehälters mit einem Hall-Element in der Signaleinheit und einem bis zum Boden vorgestreckten Führungsrohr.
Fig.3 eine erfindungsgemäße Ausführungsform des Fluidbehälters mit einem Hall-Element in der Signaleinheit und vom Boden zum Führungsrohr vorgestreckten Vorsprung zur Weiterführung des Geberelements.

### Fig. 1

Der bekannte Fluidbehälter 1 weist ein mit einem Fluid befüllbares Gehäuse 19 auf. Die hydraulische Schnittstellen 23,23' verbinden den Innenraum 3 des Behälters 19 mit der hier nicht gezeigten Bremsanlage und ermöglichen die Fluidzirkulation. Für eine zuverlässige Funktion der Bremsanlage ist eine Mindestmenge des Fluiden erforderlich, welche in Abhängigkeit von der Beschaffenheit des Behälters 19 und gegebenenfalls eines definierten Sicherheitsfaktors in dem Gehäuse 19 einen Mindestfüllstand definiert.

In dem Innenraum 3 des Gehäuses 19 ist in senkrechter Ausrichtung ein Führungsrohr 7 angeordnet. In dem Führungsrohr 7 ist eine Signaleinheit 6 mit einem Reed-Schalter 22 untergebracht. Der Reed-Schalter 22 definiert durch seine Position einen Schaltpunkt 17, welcher in Höhe des zu überwachenden Mindestfüllstandes durch konstruktive Auslegung vorgesehen ist.

An dem Führungsrohr 7 ist ein Positionsgeber 4 geführt. Der Positionsgeber 4 ist als ein ringförmiger auf der Fluidoberfläche schwimmender Schwimmer ausgebildet, markiert somit durch seine Position den aktuellen Füllstand. In dem Positionsgeber 4 ist ein ringförmiges Magnetelement 5 angeordnet. Das Magnetelement 5 ist als Permanentmagnet ausgebildet und erzeugt ein konstantes Magnetfeld 12, welches ungleichmäßig geformt ist und hier stark vereinfacht durch eine größere Hauptkeule 13 und kleinere, räumlich von der Hauptkeule 13 abgesetzten Nebenkeulen 14, 14' dargestellt ist. Das Magnetfeld 12 versetzt den Reed-Schalter 22 in einen geschalteten Zustand, bei dem ein Stromkreis geschlossen und dadurch ein Warnsignal erzeugt wird.

Um sicherzustellen, dass das Warnsignal auch nach Absinken des Fluides unterhalb des Mindestfüllstandes vorliegt, wird die Bewegung des Positionsgebers 4 nach unten durch einen unteren Anschlag 20 begrenzt, welcher am Boden 8 des Gehäuses 19 angeformt ist. Um Fehlschalrungen durch Nebenkeule 14 zu verhindern, ist die Bewegung des Positionsgebers 4 nach oben durch einen oberen Anschlag 21 begrenzt. Der Abstand entlang des Führungsrohrs 7 zwischen dem Oberen 21 und dem unteren 20 Anschlägen definiert so eine Bewegungsstrecke des Geberelements 4.

### Fig. 2

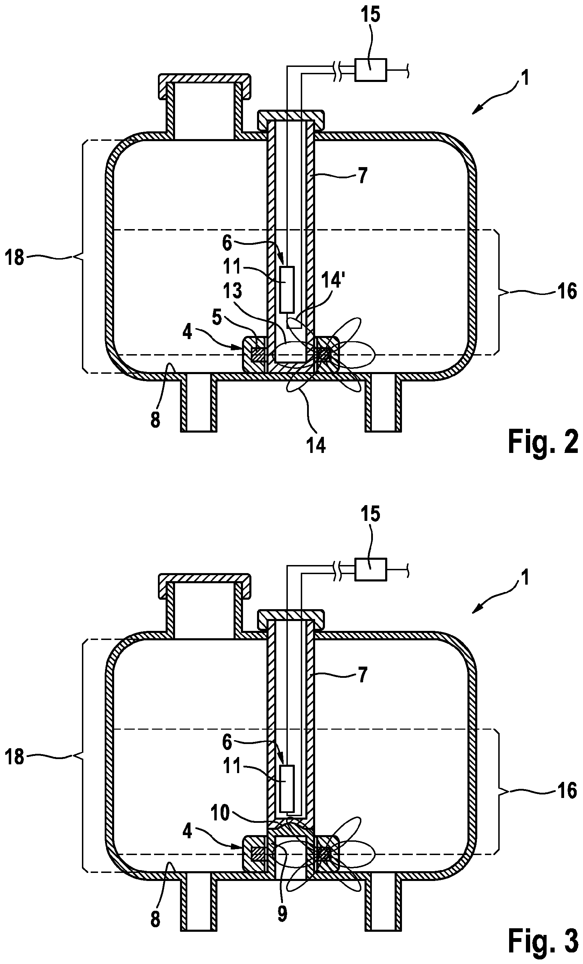

In der Fig.2 ist eine andere, nicht erfindungsgemäße Ausführungsform des Fluidbehälters 1 vereinfacht abgebildet. Im Unterschied zu der vorstehend beschriebenen Ausführung verfügt die Signaleinheit 6 über ein in dem Führungsrohr 7 angeordnetes Hall-Element 11. Das Führungsrohr 7 ist derart verlängert ausgelegt, dass es bis zum Boden 8 vom Gehäuse 19 des Fluidbehälters 1 reicht. Zudem fehlen die bewegungseinschränkenden Anschläge 20,21, womit die Bewegungsstrecke 18 des Positionsgebers 4 sich über die gesamte mögliche Füllhöhe des Fluidbehälters 1 ausdehnt.

Bekanntlich erzeugt ein vom Strom durchflossenes Hall-Element eine Ausgangsspannung, welche proportional zum Produkt aus magnetischer Flussdichte und Strom ist. Hiermit weist es im Unterschied zum Reed-Schalter ein analoges Verhalten auf. Weil die Flussdichten der Haupt- und Nebenkeulen 13,14,14' des vom Magnetelement 5 erzeugten Magnetfelds 12 konstant und bekannt sind, lässt sich aus der Höhe der Ausgangsspannung und ihrer zeitlichen Veränderung die Entfernung des Magnetelements 5 vom Hall-Element 11 sowie seine Bewegungsrichtung und Bewegungsgeschwindigkeit innerhalb einer ausgedehnten Erfassungsstrecke 16 errechnen. Zu diesem Zweck ist der erfindungsgemäßen Messeinrichtung eine elektronische Auswerteeinheit 15 zugeordnet, welche die Signaleinheit 6 steuert, mit Strom versorgt und die Ausgangsspannung auswertet. Die Erfassungsstrecke 16 kann je nach Bedarf und Komponentenzusammensetzung mehr als 10 mm betragen. Vorzugsweise beträgt die Erfassungsstrecke 16 mehr als 20mm und idealerweise erstreckt sie sich über die gesamte Füllhöhe des Fluidbehälters 1.

Je nach gestellten Anforderungen und Aufbau des Fluidbehälters 1 kann das Hall-Element 11 derart positioniert werden, dass die Erfassungsstrecke 16 den gewünschten Bereich des Füllstandshöhe abdeckt, vorzugsweise die gesamte mögliche Füllhöhe. Bei Bedarf können innerhalb der Erfindung mehrere Hall-Elemente 11 zueinander beabstandet in verschiedenen Höhenpositionen angeordnet werden, um die Erfassungsstrecke 16 weiter zu vergrößern, wenn beispielsweise die Reichweite eines einzelnen Hall-Elements 11 nicht ausreicht. Ebenso ist es innerhalb der Erfindung vorstellbar, mehrere Hall-Elemente redundant auf derselben Höhenposition zu platzieren um die Ausfallsicherheit zu erhöhen.

### Fig. 3

In der Fig.3 ist eine bevorzugte erfindungsgemäße Ausführungsform des Fluidbehälters 1 abgebildet. Im Unterschied zu der Ausführungsform nach Fig.2 ist das Führungsrohr 7 verkürzt gestaltet. Gleichzeitig erhebt sich vom Boden 8 in Richtung Führungsrohr 7 ein Vorsprung 9, welcher zur Weiterführung des Positionsgebers 4 bis zum Boden 8 vorgesehen ist.

Für eine sichere Montage des Führungsrohrs 7 und ungehinderte Führung des Positionsgebers 4 ist zwischen dem Führungsrohr 7 und dem Vorsprung 9 eine formschlüssige Zentriereinrichtung 10 vorgesehen, welche bei Montage des Führungsrohrs 7 zwangsweise eine koaxiale Ausrichtung der beiden zueinander sicherstellt.

Bei der gezeigten Ausführungsform ist die Zentriereinrichtung 10 al eine konische Erhebung am Ende des Vorsprungs 9 gestaltet, welche in eine komplementäre Vertiefung am Ende des Führungsrohrs 7 eingreift. Andere funktionsäquivalente Varianten der Zentriereinrichtung 10 sind innerhalb der Erfindung selbstverständlich ebenso zulässig.

### Bezugszeichenliste

- 1: Fluidbehälter
- 2: Messeinrichtung
- 3: Innenraum
- 4: Positionsgeber
- 5: Magnetelement
- 6: Signaleinheit
- 7: Führungsrohr
- 8: Boden
- 9: Vorsprung
- 10: Zentriereinrichtung
- 11: Hall-Element
- 12: Magnetfeld
- 13: Hauptkeule
- 14: Nebenkeule
- 15: Auswerteeinheit
- 16: Erfassungsstrecke
- 17: Schaltpunkt
- 18: Bewegungsstrecke
- 19: Gehäuse
- 20: Unterer Anschlag
- 21: Oberer Anschlag
- 22: Reed-Schalter
- 23: Schnittstelle

## Patentansprüche

1. Fluidbehälter (1) mit einer in einem Innenraum (3) innerhalb des Fluidbehälters (1) angeordneten Einrichtung (2) zur Füllstandsüberwachung von einem Fluid, die Einrichtung (2) umfassend einen linear beweglichen Positionsgeber (4) mit einem Magnetelement (5), dessen Position mit dem Füllstand des Fluides im Fluidbehälter (1) korreliert und eine Signaleinheit (6) zur Erfassung der Position des Magnetelements (5), die in Abhängigkeit von der Position des Magnetelements (5) wenigstens ein elektrisches Signal erzeugt und hierfür wenigstens ein Hall-Element (11) aufweist, wobei die Signaleinheit (6) im Wesentlichen innerhalb eines Führungsrohrs (7) angeordnet ist, an welchem der Positionsgeber (4) geführt ist, **dadurch gekennzeichnet, dass** von einem Boden (8) des Fluidbehälters (1) in Richtung Führungsrohr (7) ein Vorsprung (9) vorgestreckt ist, welcher ebenfalls zur Führung des Positionsgeber (4) vorgesehen ist, wodurch der Positionsgeber (4) im Wesentlichen bis zum Boden (8) des Fluidbehälters (1) bewegbar ist ..

2. Fluidbehälter (1) nach Anspruch 1 **dadurch gekennzeichnet, dass** zwischen dem Führungsrohr (7) und dem Vorsprung (9) eine formschlüssige Zentriereinrichtung (10) zur zwangsweisen koaxialen Ausrichtung des Führungsrohrs (7) mit dem Vorsprung (9) vorgesehen ist.

3. Fluidbehälter (1) nach Anspruch 1 oder 2 **dadurch gekennzeichnet, dass** ein Magnetfeld (12) des Magnetelements (5), wenigstens eine Hauptkeule (13) und wenigstens eine Nebenkeule (14, 14') aufweist, welche in dem Hall-Element (11) unterschiedliche Ausgangsspannungen hervorrufen und eine elektronische Auswerteeinheit (15) vorgesehen ist, welche auf Basis der durch die Haupt- und/oder Nebenkeulen (13,14.14`)in dem Hall-Element (11) hervorgerufenen Ausgansspannungen eine eindeutige Position des Positionsgebers (4) innerhalb einer Erfassungsstrecke (16) ermittelt.

4. Fluidbehälter (1) nach Anspruch 3 **dadurch gekennzeichnet, dass** die Erfassungsstrecke (16) größer als 10mm, vorzugsweise größer als 20mm vorgesehen ist.

5. Fluidbehälter (1) nach wenigstens einem der Ansprüche 1-4 **dadurch gekennzeichnet, dass** der Fluidbehälter (1) als Bremsflüssigkeitsbehälter einer hydraulischen Kraftfahrzeugbremsanlage ausgebildet ist.

6. Verfahren zum Betrieb einer Einrichtung (2) eines Fluidbehälters (1)nach Anspruch 5 **dadurch gekennzeichnet, dass** die Position des Positionsgebers (4) kontinuierlich oder in regelmäßigen Zeitabständen ermittelt und mit erwarteten Füllstandswerten verglichen wird, welche auf Basis einer ordnungsgemäß funktionieren Kraftfahrzeugbremsanlage unter Berücksichtigung von Umweltbedingungen ermittelt sind, wobei bei Feststellung einer progressiven Abweichung in Richtung Füllstandsabnahme eine Leckage des Fluides vermutet und eine zugeordnete Warn- und/oder Gegenmaßnahme eingeleitet wird.

7. Verfahren zum Betrieb einer Einrichtung (2) eines Fluidbehälters (1)nach Anspruch 5 **dadurch gekennzeichnet, dass** die Position des Positionsgebers (4) bei Fahrbetrieb kontinuierlich oder in regelmäßigen Zeitabständen ermittelt und auf Korrelation mit räumlichen Beschleunigungswerten des Fahrzeugs geprüft wird, wobei bei mehrfacher Abweichung von einer erwarteten Position eine Behinderung einer ordnungsgemäßen Freigängigkeit des Positionsgebers (4) vermutet und eine zugeordnete Warn- und/oder Gegenmaßnahme eingeleitet wird.

## Claims

1. Fluid container (1) having a device (2) which is arranged in an interior space (3) within the fluid container (1) and serves for monitoring the fill level of a fluid, the device (2) comprising a linearly movable position encoder (4) having a magnet element (5), the position of which correlates with the fill level of the fluid in the fluid container (1), and comprising a signal unit (6) for detecting the position of the magnet element (5), which signal unit generates in a manner dependent on the position of the magnet element (5) at least one electrical signal and, for this purpose, has at least one Hall element (11), wherein the signal unit (6) is arranged substantially within a guide tube (7) on which the position encoder (4) is guided, **characterized in that** a projection (9) extends from a base (8) of the fluid container (1) forwards in the direction of the guide tube (7) and is likewise provided for guidance of the position encoder (4), whereby the position encoder (4) is movable substantially as far as the base (8) of the fluid container (1).

2. Fluid container (1) according to Claim 1, **characterized in that** provision is made between the guide tube (7) and the projection (9) of a form-fitting centring device (10) for forcibly coaxial alignment of the guide tube (7) with the projection (9).

3. Fluid container (1) according to Claim 1 or 2, **characterized in that** a magnetic field (12) of the magnet element (5) has at least one main lobe (13) and at least one side lobe (14, 14'), which induce different output voltages in the Hall element (11), and provision is made of an electronic evaluation unit (15) which, on the basis of the output voltages induced in the Hall element (11) by the main and/or side lobes (13, 14, 14'), determines a unique position of the position encoder (4) within a detection range (16).

4. Fluid container (1) according to Claim 3, **characterized in that** the detection range (16) is provided to be greater than 10 mm in size, preferably greater than 20 mm in size.

5. Fluid container (1) according to at least one of Claims 1-4, **characterized in that** the fluid container (1) is designed as a brake-fluid container of a hydraulic motor-vehicle brake system.

6. Method for operating a device (2) of a fluid container (1) according to Claim 5, **characterized in that** the position of the position encoder (4) is determined continuously or at regular time intervals and is compared with expected fill-level values, which are determined on the basis of a properly functioning motor-vehicle brake system with environmental conditions taken into consideration, wherein, in the event of a progressive deviation towards a decrease in fill level being established, leakage of the fluid is assumed and an associated warning measure and/or countermeasure is initiated.

7. Method for operating a device (2) of a fluid container (1) according to Claim 5, **characterized in that**, during driving operation, the position of the position encoder (4) is determined continuously or at regular time intervals and is checked for correlation with spatial acceleration values of the vehicle, wherein, in the event of deviation from an expected position multiple times, an impediment with regard to proper free movement of the position encoder (4) is assumed and an associated warning measure and/or countermeasure is initiated.

## Revendications

1. Réservoir de fluide (1) avec un dispositif (2) agencé dans un espace intérieur (3) à l'intérieur du réservoir de fluide (1) pour la surveillance du niveau de remplissage d'un fluide, le dispositif (2) comprenant un capteur de position (4) mobile linéairement avec un élément magnétique (5) dont la position est en corrélation avec le niveau de remplissage du fluide dans le réservoir de fluide (1) et une unité de signalisation (6) pour la détection de la position de l'élément magnétique (5), qui génère au moins un signal électrique en fonction de la position de l'élément magnétique (5) et présente à cet effet au moins un élément à effet Hall (11), l'unité de signalisation (6) étant agencée essentiellement à l'intérieur d'un tube de guidage (7), sur lequel le capteur de position (4) est guidé, **caractérisé en ce qu'**une saillie (9) s'étend depuis un fond (8) du réservoir de fluide (1) en direction du tube de guidage (7), laquelle est également prévue pour guider le capteur de position (4), ce qui permet de déplacer le capteur de position (4) essentiellement jusqu'au fond (8) du réservoir de fluide (1).

2. Réservoir de fluide (1) selon la revendication 1, **caractérisé en ce qu'**il est prévu entre le tube de guidage (7) et la saillie (9) un dispositif de centrage (10) à complémentarité de forme pour l'alignement coaxial forcé du tube de guidage (7) avec la saillie (9).

3. Réservoir de fluide (1) selon la revendication 1 ou 2, **caractérisé en ce qu'**un champ magnétique (12) de l'élément magnétique (5) présente au moins un lobe principal (13) et au moins un lobe secondaire (14, 14') qui provoquent des tensions de sortie différentes dans l'élément à effet Hall (11) et **en ce qu'**il est prévu une unité d'évaluation électronique (15) qui, sur la base des tensions de sortie provoquées par les lobes principaux et/ou secondaires (13, 14, 14') dans l'élément à effet Hall (11) détermine une position univoque du capteur de position (4) à l'intérieur d'une distance de détection (16).

4. Réservoir de fluide (1) selon la revendication 3, **caractérisé en ce que** la distance de détection (16) est prévue pour être supérieure à 10 mm, de préférence supérieure à 20 mm.

5. Réservoir de fluide (1) selon au moins l'une quelconque des revendications 1 à 4, **caractérisé en ce que** le réservoir de fluide (1) est configuré sous forme de réservoir de liquide de frein d'un système de freinage hydraulique de véhicule automobile.

6. Procédé d'exploitation d'un dispositif (2) d'un réservoir de fluide (1) selon la revendication 5, **caractérisé en ce que** la position du capteur de position (4) est déterminée en continu ou à des intervalles de temps réguliers et est comparée à des valeurs de niveau de remplissage attendues, qui sont déterminées sur la base d'un système de freinage de véhicule automobile fonctionnant correctement en tenant compte des conditions environnementales, une fuite du fluide étant supposée en cas de constatation d'un écart progressif dans le sens d'une diminution du niveau de remplissage et une mesure d'avertissement et/ou une contre-mesure associée étant déclenchée.

7. Procédé d'exploitation d'un dispositif (2) d'un réservoir de fluide (1) selon la revendication 5, **caractérisé en ce que** la position du capteur de position (4) est déterminée en continu ou à des intervalles de temps réguliers lors de la conduite et est contrôlée quant à sa corrélation avec des valeurs d'accélération spatiales du véhicule, un obstacle à une liberté de mouvement correcte du capteur de position (4) étant supposé en cas d'écart multiple par rapport à une position attendue et une mesure d'avertissement et/ou une contre-mesure associée étant déclenchée.
